(19) Europäisches Patentamt
European Patent Office
Office européen des brevets

(11) EP 2 096 875 A1

(12) EUROPEAN PATENT APPLICATION
published in accordance with Art. 153(4) EPC

(43) Date of publication:
02.09.2009 Bulletin 2009/36

(51) Int Cl.:
H04N 17/02 (2006.01)

(21) Application number: 06843077.6

(22) Date of filing: 22.12.2006

(86) International application number:
PCT/JP2006/325620

(87) International publication number:
WO 2008/078358 (03.07.2008 Gazette 2008/27)

(84) Designated Contracting States:
AT BE BG CH CY CZ DE DK EE ES FI FR GB GR
HU IE IS IT LI LT LU LV MC NL PL PT RO SE SI
SK TR

(71) Applicant: Leader Electronics Corp.
Yokohama-shi, Kanagawa 223-8505 (JP)

(72) Inventors:
• IMAMURA, Genichi
Yokohama-shi
Kanagawa 223-8505 (JP)

• YANO, Koji
Yokohama-shi
Kanagawa 223-8505 (JP)

(74) Representative: Hartz, Nikolai
Wächtershäuser & Hartz
Patentanwälte
Weinstrasse 8
80333 München (DE)

(54) VIDEO SIGNAL MONITORING DEVICE AND METHOD

(57) An apparatus for monitoring a video signal comprises means (11) for receiving a video signal (X(video), Y(video), Z(video)) having X-, Y- and Z-components, means (13) for calculating a position (x(video), y(video)) having an x-axis component and a y-axis component on a xy chromaticity diagram from the video signal in accordance with a predetermined conversion formula, and means (14) for displaying the position (59). The means (14) can display a triangle (57, 58) which connects three xy-values corresponding to R-, G- and B-components, respectively, which belong to a predetermined color reference system, a range (56) on the xy chromaticity diagram which can be viewed by humans, and/or a marker (60) for a range of an xvYCC display system. The means (14) can indicates whether or not the video signal represents a color (x(video), y(video)) which is located out of a predetermined range (51-54). The xy chromaticity diagram can be transformed, for example, to a UCS chromaticity diagram.

Fig. 5

EP 2 096 875 A1

**Description**

TECHNICAL FIELD

The present invention relates generally to an apparatus and method for monitoring a video signal, and more particularly, to an apparatus and method for monitoring a color reproduction area (color gamut) of a video signal (X, Y, Z) which has X-, Y- and Z-components.

BACKGROUND ART

Conventional approaches for monitoring a video signal for color includes, for example, those shown below:

(1) a vector representation which utilizes Y-, Cb- and Cr- components;
(2) a vector representation which utilizes R-, G- and B-components;
(3) a level representation which utilizes R-, G- and B-components; and
(4) a gamut representation which utilizes R-, G- and B-components.

The vector representation which utilizes Y-, Cb- and Cr-components is shown, for example, in Fig. 3 of Patent Document 1, Fig. 1 of Patent Document 2, Figs. 2 and 5 of Patent Document 3, and Figs. 4 and 5 of Patent Document 4 listed below. The vector representation which utilizes R-, G-and B-components is shown, for example, in Fig. 1 of Patent Document 5 and Fig. 1 of Patent Document 6. The level representation which utilizes R-, G- and B-components is shown, for example, in Figs. 12 and 14 of Patent Document 6. The gamut representation which utilizes R-, G- and B-components is shown, for example, in Fig. 4 of Patent Document 2, Figs. 2a, 2b and 2c of Patent Document 7, and Fig. 1 of Patent Document 8.

Patent Document 1: U.S. Patent No. 5,455,620 (Fig. 3);
Patent Document 2: U.S. Patent Application Publication No. 2004/218044 Specification (Figs. 1, 4);
Patent Document 3: U.S. Patent Application Publication No. 2005/052534 Specification (Figs. 2, 5);
Patent Document 4: U.S. Patent Application Publication No. 2004/263627 Specification (Figs. 4, 5);
Patent Document 5: U.S. Patent No.5,307,087 Specification (Fig. 1);
Patent Document 6: U.S. Patent Application Publication No. 2005/140690 Specification (Figs. 1, 12, 14);
Patent Document 7: U.S. Patent Application Publication No. 2004/165067 Specification (Figs. 2a, 2b, 2c);
Patent Document 8: U.S. Patent No.5,311,295 Specification (Fig. 1);

DISCLOSURE OF THE INVENTION

PROBLEMS TO BE SOLVED BY THE INVENTION

A video signal in a television broadcasting station conventionally has Y-, Cb and Cr-components or R-, G- and B-components. Contents of video signals include, for example, television, movie and the like. DCI (Digital Cinema Initiatives) published Digital Cinema Standard (V1.0) on July 20, 2005, and employed SMPTE (Society of Motion Picture and Television Engineers) XYZ as a color space of a video signal for recording movies. In this regard, SMPTE XYZ is the same as CIE (1931) XYZ, and CIE (Commission International de L'Eclairage) (1931) XYZ are stimulus values for representing colors, which was defined by CIE in 1931. Apparatuses or methods alone disclosed in Patent Documents 1 - 8 listed above cannot monitor a video signal which has X-, Y- and Z-components.
Objects of the present invention include at least one of the following items:

provision of an apparatus (or a method) for monitoring colors of a video signal conforming to the digital cinema standard;
provision of an apparatus (or a method) for simply monitoring a video signal; and
items which become apparent to those skilled in the art by referring to embodiments described below and accompanying drawings.

MEANS FOR SOLVING THE PROBLEMS

An apparatus of the present invention comprises means (11) for receiving a video signal (X(video), Y(video), Z(video) having X-, Y- and Z-components, means (13) for calculating a position (x(video), y(video)) having an x-component and a y-component on a xy chromaticity diagram from the video signal in accordance with a predetermined conversion formula, and means (14) for displaying the position.

The means (14) can display a marker (31) of a triangle which connects three xy-values corresponding to R-, G- and B-components, respectively, which belong to a predetermined color reference system. The means (14) can also display a marker (41, 42) for a range on the xy chromaticity diagram which can be viewed by humans, and/or a range of an xvYCC display system.

The means (14) can indicates whether or not the video signal represents a color (x(video), y(video)) out of a predetermined range.

A method of the present invention includes the steps of providing (11, 12) a video signal (X(video), Y(video), Z(video)) having X-, Y- and Z-components, calculating (13) a position (x(video), y(video) having x-axis and y-axis components on an xy chromaticity diagram from the video signal in accordance with predetermined conversion formulae, and displaying (14) the position.

The xy chromaticity diagram can be transformed, for example, to a UCS chromaticity diagram.

BRIEF DESCRIPTION OF THE DRAWINGS

Fig. 1 generally shows a block diagram of an apparatus according to the present invention.
Fig. 2 shows an exemplary display of means 14 which can be viewed by the user.
Fig. 3 shows an exemplary display of the means 14 which can be viewed by the user.
Fig. 4 shows an exemplary display of the means 14 which can be viewed by the user.
Fig. 5 shows an exemplary display of the means 14 which can be viewed by the user.
Fig. 6 shows an exemplary display of the means 14 which can be viewed by the user.
Fig. 7 shows an exemplary display of the means 14 which can be viewed by the user.

BEST MODE FOR CARRYING OUT THE INVENTION

For monitoring a video signal having X-, Y- and Z-components for a color reproduction area (color gamut), a three-dimensional space can be utilized. However, the inventors have recognized it difficult to rely on the three-dimensional space for monitoring colors. In other words, the inventors have recognized it difficult to ascertain colors from a position represented in the three-dimensional space. Thus, the inventors have recognized that users would be able to simply monitor a video signal by use of a two-dimensional coordinate system (specifically, an xy chromaticity diagram, a UCS chromaticity diagram or the like) which facilitates the users to identify or ascertain colors.

(1. Vector Representation which Utilizes X- and Y-components)

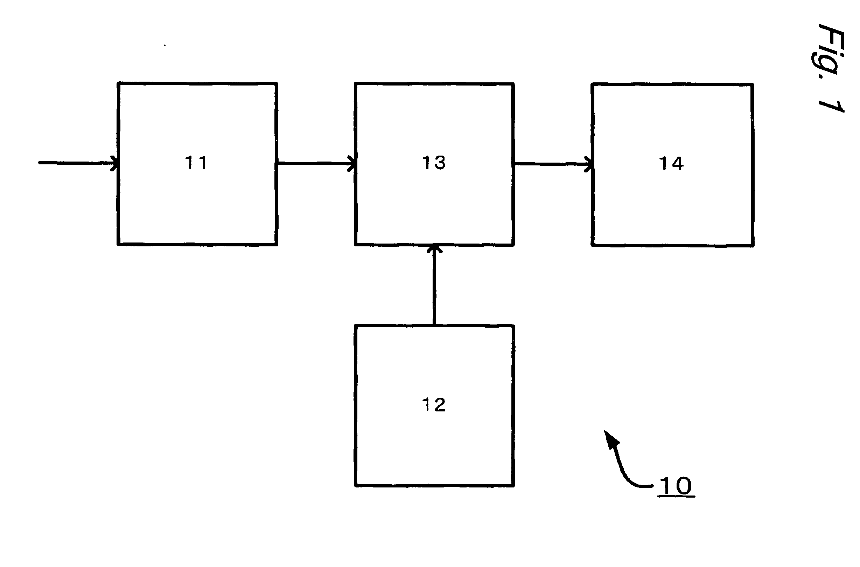

Fig. 1 generally shows a block diagram of an apparatus according to the present invention. As shown in Fig. 1, the apparatus 10 of the present invention (for example, a waveform monitor or the like) comprises means 11 (for example, an input terminal or the like) for receiving a video signal (X(video), Y(video), Z(video) having X-, Y- and Z-components; means 12 (for example, a memory, an HDD (Hard Disk Drive) or the like) for storing conversion formulae; means 13 (for example, a CPU or the like) for reading the conversion formulae to calculate a position (x(video), y(video) having x- and y-components on an xy chromaticity diagram from the video signal (X(video), Y(video), Z(video)); and means 14 (for example, a display or the like) for displaying the position (x(video), y(video)).

The conversion formulae from X-, Y- and Z-components to x- and y-components are as follows:

$$x = X/(X+Y+Z);$$

and

$$y = Y/(X+Y+Z)$$

Since a position on the xy chromaticity diagram represents a hue and a saturation, the user can readily ascertain a color at a position on the xy chromaticity diagram. In other words, the apparatus 10 of the present invention is an apparatus for monitoring a video signal by simply depicting the video signal on the xy chromaticity diagram.

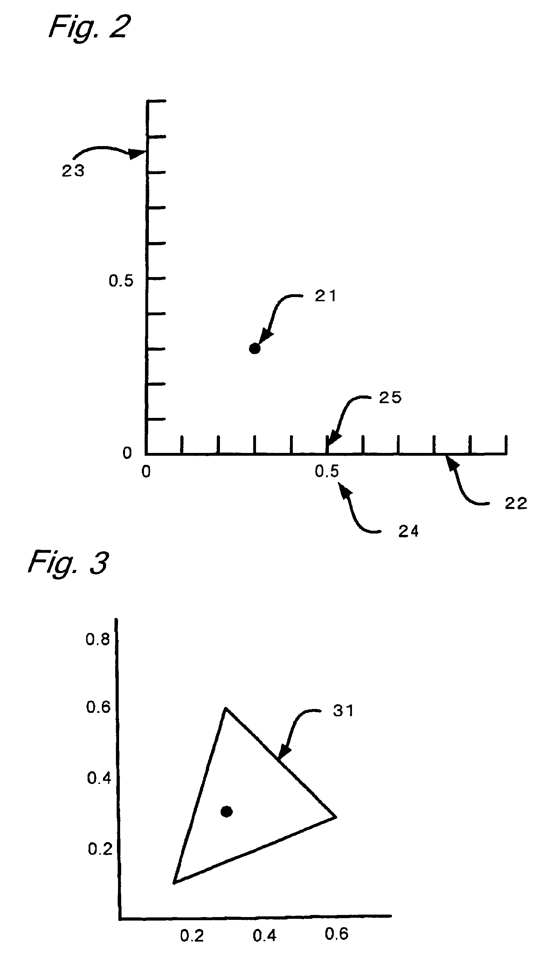

Fig. 2 shows an exemplary display of the means 14 which can be viewed by the user. As described above, means 14 displays a position (x(video), y(video)) (see an arrow 21). In this regard, since X-, Y- and Z-components of a video signal are generally dynamic, a position (21) in Fig. 2 moves about. The means 14 can display an afterimage of the position by displaying the position (x(video), y(video) for a predetermined period of time. In other words, the means 14 can display a video signal as a cloud (a set of moving points).

The color at the position (x(video), y(video)) may be a single color (for example, green) or a variable color corresponding to the color on the xy chromaticity diagram.

(2. XY-Coordinate Display)

As shown in Fig. 2, the means 14 can display an x-coordinate axis (arrow 22) and a y-coordinate axis (arrow 23). The means 12 stores x-coordinate axis data and y-coordinate axis data, and the means 13 reads the x-coordinate axis data and y-coordinate axis data, and outputs them to the means 14. Alternatively, the means 13 generates the x-coordinate axis data and y-coordinate axis data. Each of the x-coordinate axis data and y-coordinate axis data can be set in the range of 0 to 1. In this regard, each of the x-coordinate axis data and y-coordinate axis data may have a maximum value which may be smaller than one. Alternatively, the maximum values of the x-coordinate axis data and y-coordinate axis data may be respectively set near maximum values (for example, x=0.75, y=0.85) in a range of the xy chromaticity diagram which can be viewed by humans.

The means 14 can further display a scale (arrow 24) (and scale values (arrow 25)). The means 12 (or means 13) stores (or generates) scale data (and scale value data) corresponding to respective ranges of the x-coordinate axis data and y-coordinate axis data. The scale data is represented, for example, in increments of 0.1. The scale value data is represented, for example, in increments of 0.5.

The x-coordinate axis, y-coordinate axis, scales, and values may be displayed in arbitrary colors, for example, set to white. By displaying the x-coordinate axis, y-coordinate axis, scales, and/or values, the user can more readily ascertain a color at a position on the xy chromaticity diagram.

(3. Display of Color Reference Marker)

Fig. 3 shows an exemplary display of the means 14 which can be viewed by the user. As shown in Fig. 3, the means 14 can display a triangular marker (arrow 31) which connects three xy-values corresponding to maximum R-, G- and B-components which belong to a predetermined color reference system. The predetermined reference system includes, for example, characteristics of a variety of displays (for example, movie projectors) which display in conformity to ITU-R709 (sRGB), RGB. By displaying the predetermined reference system, the user can more readily ascertain a color at a position on the xy chromatic diagram.

The means 12 can store XYZ-values or an xy-values corresponding to maximum R-, G- and B-components (Rmax(marker), Gmax(marker), Bmax(marker)) which belong to the predetermined reference system. When the XYZ-values are stored, the means 13 calculates x- and y-values (x(marker), y(marker)) on the xy chromaticity diagram from the XYZ-values (X(marker), Y(marker), Z(marker)) using the conversion formulae.

Regarding a maximum R-component, the XYZ-values can be represented as (X(Rmarker), Y(Rmarker), Z(Rmarker)). Regarding a maximum G-component, the XYZ-values can be represented as (X(Gmarker), Y(Gmarker), Z(Gmarker)).
Regarding a maximum B-component, the XYZ-values can be represented as (X(Bmarker), Y(Bmarker), Z(Bmarker)).
Regarding the maximum R-component, the xy-values can be represented as (x(Rmarker), y(Rmarker)). Regarding the maximum G-component, the xy-values can be represented as (x(Gmarker), y(Gmarker)). Regarding the maximum B-component, the xy-values can be represented as (x(Bmarker), y(Bmarker)).

The means 12 (or means 13) can store (or calculate) XYZ-values or xy-values corresponding to a plurality of predetermined reference systems. Specifically, when a (first) predetermined reference system is ITU-R709 (sRGB), the relationship between XYZ-values and RGB-values is expressed in the following manner:

$$X = 0.412 * R + 0.358 * G + 0.181 * B;$$

$$Y = 0.213 * R + 0.715 * G + 0.072 * B;$$

and

$$Z = 0.019 * R + 0.119 * G + 0.951 * B.$$

According to these equations, when the (first) predetermined reference system is ITU-R709 (sRGB), XYZ-values corresponding to maximum R-, G- and B-components, or xy-values calculated from the XYZ-values are as follows:

For the maximum R-component:
X(Rmarker1) = 0.412,
Y(Rmarker1) = 0.213,
Z(Rmarker1) = 0.019, or
x(Rmarker1) = 0.640,
y(Rmarker1) = 0.330;
For the maximum G-component:
X(Gmarker1) = 0.358,
Y(Gmarker1) = 0.715,
Z(Gmarker1) = 0.119, or
x(Gmarker1) = 0.300,
y(Gmarker1) = 0.600;
For the maximum B-component:
X(Bmarker1) = 0.181,
Y(Bmarker1) = 0.072,
Z(Bmarker1) = 0.951, or
x(Bmarker1) = 0.150,
y(Bmarker1) = 0.060.

The means 14 can display a plurality of triangular markers corresponding to a plurality of predetermined color reference systems. Alternatively, the means 14 can display one triangular marker corresponding to one of a plurality of predetermined color reference systems, selected by the user. The triangular marker corresponding to a predetermined color reference system can be displayed in an arbitrary color, for example, in blue. For example, when two triangular markers are displayed, a first marker is blue in color, while a second marker is green in color, by way of example.

(4. Visible Range Marker Display, xvYCC Displayable Marker Display System)

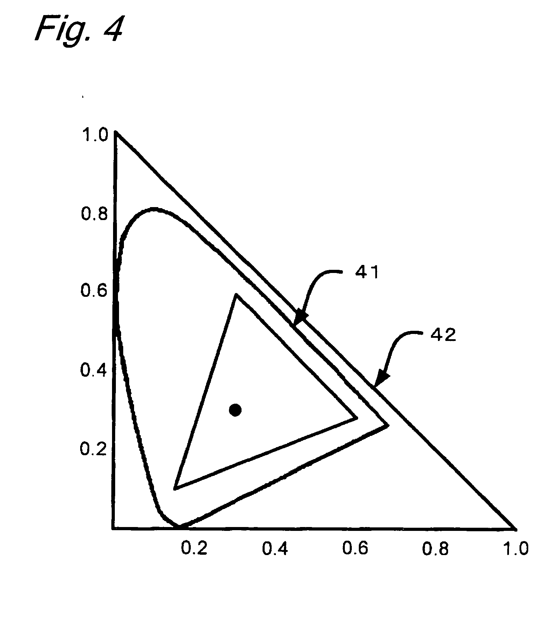

Fig. 4 shows an exemplary display of the means 14 which can be viewed by the user. As shown in Fig. 4, the means 14 can display a marker (arrow 41) for a range on the xy chromaticity diagram which can be viewed by humans. Instead of this marker (arrow 41), or in addition to this marker (arrow 41), the means 14 can display a marker (arrow 42) for a color reproducible range on the xy chromaticity diagram based on xvYCC (IEC61966-2-4). For reference, xvYCC (IEC61966-2-4) is an extended color space for moving images defined by IEC (International Electrotechnical Commission).
By displaying the marker for the range on the xy chromaticity diagram which can be viewed by humans, the user can more readily ascertain a color at a position on the xy chromaticity diagram. By displaying a marker for the color reproducible range on the xy chromaticity diagram based on xvYCC (IEC61966-2-4), the user can readily ascertain a color at a position within the extended color space for moving images, mapped on the xy chromaticity diagram.
These markers may simply represent the contours of ranges or may represent the entire ranges. When a marker simply represents the contour of a range, the contour may be displayed in a single color (for example, white). When the marker indicates a range viewable by humans, its contour may vary in color in correspondence to the color on the xy chromaticity diagram. When a marker represents an entire range (including the inside), the inside may be displayed in a single color (for example, white). When the marker indicates a range viewable by humans, the inside may vary in color in correspondence to the color on the xy chromaticity diagram.
The means 12 (or means 13) stores (or generates) data on a marker for a range on the xy chromaticity diagram viewable by humans (and/or a color reproducible range on the xy chromaticity diagram based on xvYCC (IEC61922-2-4)).

(5. Gamut Display Utilizing x- and y-components)

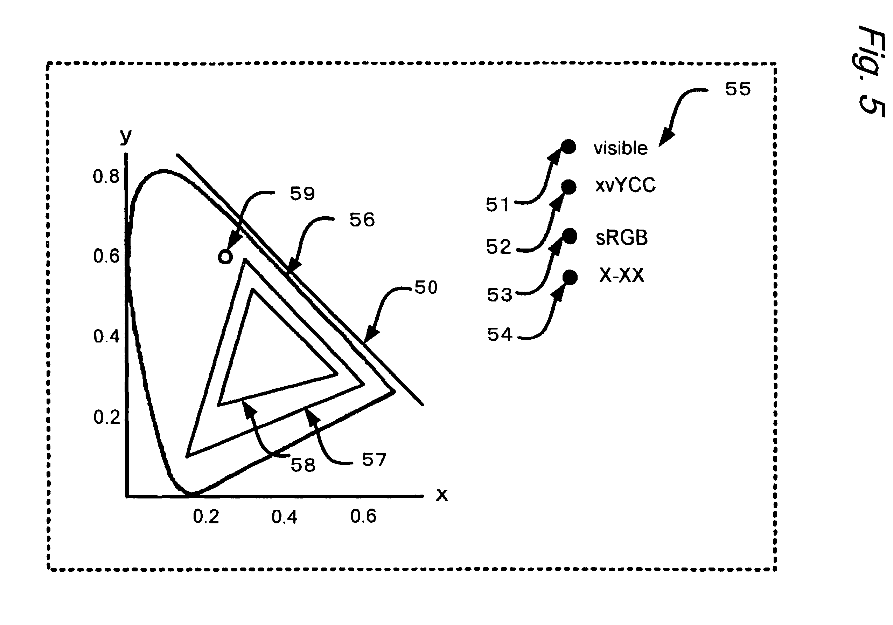

Fig. 5 shows an exemplary display of the means 14 which can be viewed by the user. As shown in Fig. 5, the means 14 (means 13) can indicate (determine) whether or not a color of a video signal (position (x(video), y(video)) having x- and y-components on the xy chromaticity diagram) is located out of a predetermined range. By automatically displaying whether or not a color of a video signal is located out of the predetermined range, the user can more readily ascertain a color at a position on the xy chromaticity diagram. The predetermined range includes, for example, a range on the xy chromaticity diagram which can be viewed by humans, a range which can be displayed on the basis of the xvYCC standard, the area of a triangle which connects three xy-values corresponding to maximum R-, G- and B-components which belong to a predetermined color reference system, and the like.

Specifically, when the predetermined range is, for example, a range on the xy chromaticity diagram which can be viewed by humans, the means 14 can indicates whether or not a color of a video signal is located out of the range on the xy chromaticity diagram which can be viewed by humans, for example, using a lamp (arrow 51), a marker (arrow 56), a display of the video signal (arrow 59), or the like. For example, when a color of a video signal is located out of the range on the xy chromaticity diagram which can be viewed by humans, the means 14 lights or blinks the lamp, for example, in red (arrow 51); lights or blinks the marker for the range on the xy chromaticity diagram which can be viewed by humans, for example, in red (arrow 56); and/or lights or blinks the displayed video signal, for example, in red (arrow 59). When a color of a video signal is not located out of the range on the xy chromaticity diagram which can be viewed by humans, the means 14 lights or blinks the lamp, for example, in green (arrow 51); lights or blinks the marker for the range on the xy chromaticity diagram which can be viewed by humans, for example, in green (arrow 56); and/or lights or blinks the displayed video signal, for example, in white (arrow 59). In this regard, for identifying the lamp (arrow 51), the means 14 can display an indicia (for example, a character string (for example, "visible" (arrow 55)), a symbol, a figure or the like) to indicate that the predetermined range is a range on the xy chromaticity diagram which can be viewed by humans.

When the predetermined range is a range which can be displayed on the basis of the xvYCC standard ($x<=1.0$ and $y<=1.0$), the means 14 can indicate whether or not a color of a video signal is located out of the range, for example, using a lamp (arrow 52), a marker (arrow 50), a display of the video signal (arrow 59), or the like. For example, when a color of a video signal is located out of the range which can be displayed on the basis of the xvYCC standard, the means 14 lights or blinks the lamp, for example, in red (arrow 52); lights or blinks the marker for the range which can be displayed on the basis of the xvYCC standard, for example, in red (arrow 50); and/or lights or blinks the displayed video signal, for example, in red (arrow 59). Otherwise, the means 14 lights or blinks the lamp, for example, in green (arrow 55); lights or blinks the marker for range which can be displayed on the basis of the xvYCC standard, for example, in green (arrow 50); and/or lights or blinks the displayed video signal, for example, in white (arrow 59). In this regard, for identifying the lamp (arrow 52), the means 14 can display an indicia (for example, a character string (for example, "xvYCC"), a symbol, a figure or the like) to indicate that the predetermined range is a range which can be displayed on the basis of the xvYCC standard.

When the predetermined range is a triangular range which connects three xy-values corresponding to maximum R-, G- and B-components which belong to ITU-R709 (sRGB), the means 14 can indicate whether or not a color of a video signal is located out of the triangular range corresponding to sRGB, for example, using a lamp (arrow 53), a marker (arrow 57), a display of the video signal (arrow 59), or the like. For example, when a color of a video signal is located out of the triangular range corresponding to sRGB, the means 14 lights or blinks the lamp, for example, in red (arrow 53); lights or blinks the marker for the range of the triangular range corresponding to sRGB, for example, in red (arrow 57); and/or lights or blinks the displayed video signal, for example, in red (arrow 59). Otherwise, the means 14 lights or blinks the lamp in green (arrow 53); lights or blinks the marker for the range of the triangular range corresponding to sRGB, for example, in green (arrow 57); and/or lights or blinks the displayed video signal, for example, in white (arrow 59). In this regard, for identifying the lamp (arrow 53), the means 14 can display an indicia (for example, a character string (for example, "sRGB"), a symbol, a figure or the like) to indicate that the predetermined range is the triangular range corresponding to sRGB.

When the predetermined range is a second triangular range (for example, a projector of model "XX" by x company) other than the triangle (first triangle) of ITU-R709 (sRGB), the means 14 can indicate whether or not a color of a video signal is located out of the second triangular range, for example, using a lamp (arrow 54), a marker (arrow 58), a display of the video signal (arrow 59), or the like.

The means 14 can indicate whether or not a color of a video signal is located out of each of a plurality of predetermined ranges. When a gamut error is indicated by a display of the video signal (arrow 59), the means 14 can light or blink the color of the displayed video signal in correspondence to one of the plurality of predetermined ranges selected by the user.

Respective maximum values of the x-coordinate axis data and y-coordinate axis data may be smaller than one. Alternatively, the respective maximum values of the x-coordinate axis data and y-coordinate axis data shown in Fig. 5 may be set to other values (for example, one), though near a maximum value in the range on the xy chromaticity diagram which can be viewed by humans.

(6. Vector Display or Level Display Utilizing R-,G- and B-Components)

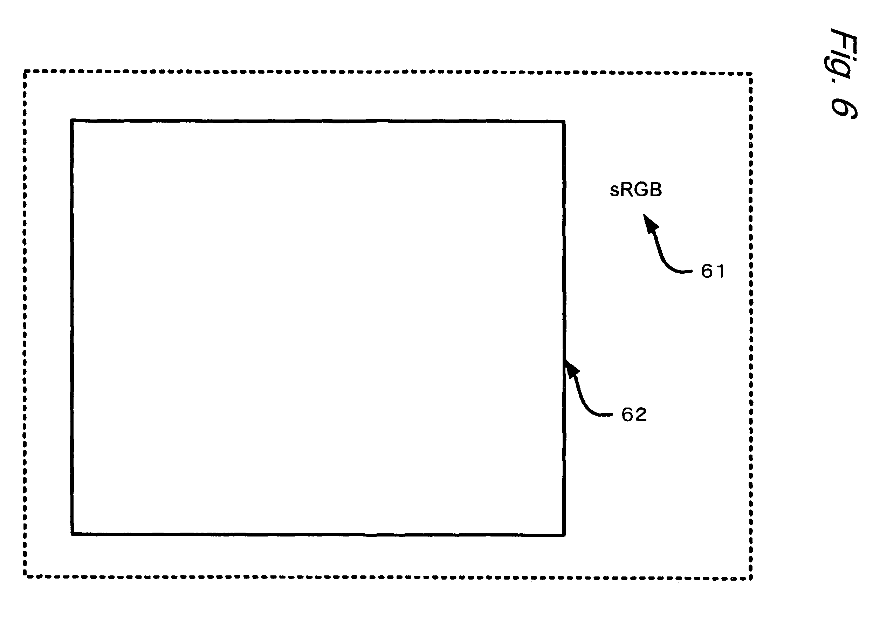

Fig. 6 shows an exemplary display of the means 14 which can be viewed by the user. As shown in Fig. 6, the means 14 can display a vector display or a level display (arrow 62) which utilizes R-, G- and B-components calculated from X-, Y-and Z-components (which belong to a predetermined color reference system (for example, sRGB, arrow 61)).
The means 12 stores conversion formulae from the X-, Y- and Z-components to the R-, G- and B-components. The means 12 can store conversion formulae corresponding to a plurality of predetermined color reference systems. For example, when the predetermined color reference system is sRGB, the conversion formulae are as follows:

$$R = 3.2410 * X - 1.537 * Y - 0.4986 * Z;$$

$$G = -0.9692 * X + 1.876 * Y + 0.0416 * Z;$$

and

$$B = 0.0556 * X - 0.204 * Y + 1.057 * Z.$$

The means 13 reads the conversion formulae (in response to a selection from the user) to calculate R-, G- and B-components from a video signal (X(video), Y(video), Z(video)). The means 13 executes required calculations such as a gamma correction, a matrix transformation and the like in accordance with the contents of a vector display or a level display which utilizes the R-, G- and B-components. In this regard, since those skilled in the art should know the vector display or level display which employs conversion formulae for converting R-, G- and B-components to color difference components, a description thereon is omitted. U.S. patent Applications corresponding to the aforementioned Patent Documents 1 - 8 are incorporated herein by reference.
By displaying the vector display or level display which utilizes the R-, G- and B-components, the user can readily ascertain a color of a video signal.

(7. Others)

It should be noted that the present invention is not limited to the aforementioned illustrative embodiment, and those skilled in the art would be able to readily modify the illustrative embodiments without departing from the claims.
For example, the xy chromaticity diagram used in the aforementioned illustrative embodiment may be replaced with a chromaticity diagram based on two-dimensional coordinates representative of a color space (for example, UCS chromaticity diagram).
The UCS chromaticity diagram was defined by CIE in 1976, and shows the following relation formulae:

$$u' = 4X/(X+15Y+3Z) = 4x(-2x+12y+3);$$

and

$$v' = 9Y/(X+15Y+3Z) = 9y(-2x+12y+3).$$

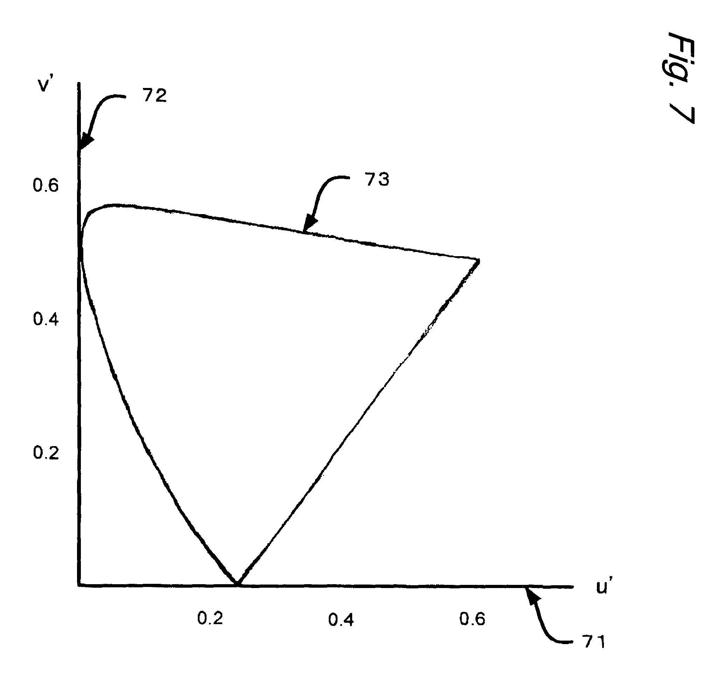

Fig. 7 shows a UCS chromaticity diagram transformed from the xy chromaticity diagram in Fig. 5. Specifically, the x-axis and y-axis in Fig. 5 correspond to a u'-axis 71 and v'-axis 72 in Fig. 7. Also, the range 56 on the xy chromaticity diagram which can be viewed by humans in Fig. 5 corresponds to a range 73 on the UCS chromaticity diagram which can be viewed by humans in Fig. 7. In this regard, for a maximum R-component, u'(Rmarkerl)=0.448, v'(Rmarkerl)=0.520; for a maximum G-component, u'(Gmarkerl)=0.128, v'(Gmarkerl)=0.560; and for a maximum B-component, u'(Bmarkerl)=0.176, v'(Bmarkerl)=0.160.

Also, the markers 50, 57, 58 and the display 59 of the video signal in Fig. 5 can be represented on the UCS chromaticity diagram in a manner similar to a marker 73.

**Claims**

1. An apparatus for monitoring a video signal, comprising:

   means (11) for receiving a video signal (X(video), Y(video), Z(video)) having X-, Y- and Z-components;
   means (13) for calculating a position having a horizontal-axis component and a vertical-axis component on a chromaticity diagram based on two-dimensional coordinates from the video signal in accordance with a predetermined conversion formula; and
   means (14) for displaying the position.

2. An apparatus according to claim 1, wherein said chromaticity diagram is an xy chromaticity diagram, wherein said means (13) calculates (x(video), y(video)) having x- and y-components on the xy chromaticity diagram.

3. An apparatus according to claim 1, further comprising:

   means (12) for storing the predetermined formula.

4. An apparatus according to claim 1, wherein:

   said means (14) displays a horizontal axis (22, 71) and/or a vertical axis (23, 72).

5. An apparatus according to claim 4, wherein:

   said means (14) displays a scale (24) and/or scale values (25) of each axis.

6. An apparatus according to claim 2, wherein:

   said means (14) displays a triangular marker (31) which connects three xy-values corresponding to R-, G- and B-components, respectively, which belong to a predetermined color reference system.

7. An apparatus according to claim 6, wherein:

   said predetermined color reference system includes at least one of ITU-R709 (sRGB) and RGB displays conforming to a variety of standards.

8. An apparatus according to claim 2, wherein:

   said means (14) displays three xy-values ((x(Rmarker), y(Rmarker)); (x(Gmarker), y(Gmarker)); (x(Bmarker), y(Bmarker))) corresponding to maximum R-, G- and B-components which belong to a predetermined color reference system.

9. An apparatus according to claim 1, wherein:

   said means (14) displays a marker (41, 42, 73) for a range on a chromaticity diagram which can be viewed by humans and/or a range for an xvYCC display system.

10. An apparatus according to claim 2, wherein:

    said means (14) indicates whether or not said video signal represents a color (x(video), y(video)) which is located out of a predetermined range.

11. An apparatus according to claim 10, wherein:

    said predetermined range is a range on an xy chromaticity diagram which can be viewed by humans and/or a range for an xvYCC display system.

12. An apparatus according to claim 10, wherein:

said predetermined range is a range of a triangle which connects three xy-values corresponding to R-, G- and B-components, respectively, which belong to a predetermined color reference system.

13. An apparatus according to claim 10, wherein:

said means (14) utilizes at least one of a lamp (51, 52, 53, 54), a marker (56, 50, 57, 58), and a display (59) of a video signal.

14. An apparatus according to claim 1, wherein said chromaticity diagram is a UCS chromaticity diagram, and said means (13) calculates (u'(video), v'(video)) which have u'-and v'-components on the UCS chromaticity diagram.

15. An apparatus according to claim 1, wherein:

said means (14) displays a vector display or a level display (62) which utilizes R-, G- and B-components calculated from X-, Y- and Z-components.

16. A method of monitoring a video signal, comprising the steps of:

providing (11, 12) a video signal (X(video), Y(video), Z(video)) having X-, Y- and Z-components;
calculating (13) a position having horizontal-axis and vertical-axis components on a chromaticity diagram based on two-dimensional coordinates from the video signal in accordance with predetermined conversion formulae; and
displaying (14) the position.

17. A method according to claim 16, wherein:

said step (14) includes the step of displaying a marker (31) of a triangle which connects three values on the chromaticity diagram corresponding to maximum R-, G- and B-components, respectively, which belong to a predetermined color reference system.

18. A method according to claim 16, wherein:

said step (14) includes the step of indicating whether or not said video signal represents a color out of a predetermined range.

19. A method according to claim 16, further comprising the step of:

calculating the R-, G- and B-components from the video signal in accordance with second conversion formulae.

20. A method according to claim 16, wherein:

said step (14) includes the step of displaying a range on the chromaticity diagram which can be viewed by humans and/or a range of an xvYCC display system.

Fig. 1

EP 2 096 875 A1

## Fig. 2

## Fig. 3

*Fig. 4*

*Fig. 5*

EP 2 096 875 A1

*Fig. 6*

*Fig. 7*

## INTERNATIONAL SEARCH REPORT

| | International application No. |
|---|---|
| | PCT/JP2006/325620 |

| A. CLASSIFICATION OF SUBJECT MATTER |
|---|
| *H04N17/02* (2006.01) i |

According to International Patent Classification (IPC) or to both national classification and IPC

| B. FIELDS SEARCHED |
|---|

Minimum documentation searched (classification system followed by classification symbols)
H04N17/02, 1/46

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2006-54679 A (Casio Computer Co., Ltd.), 23 February, 2006 (23.02.06), | 1-5,9,14-16, 20 |
| Y | Par. Nos. [0067], [0068], [0105], [0111]; Fig. 12 (Family: none) | 10-13,18 |
| X | JP 8-55213 A (Dainippon Printing Co., Ltd.), 27 February, 1996 (27.02.96), | 1-9,16,17, 19,20 |
| Y | Par. Nos. [0016] to [0018]; Figs. 6 to 8 (Family: none) | 10-13,18 |
| Y | JP 2006-262446 A (Toshiba Corp.), 28 September, 2006 (28.09.06), Par. Nos. [0065], [0076] & US 2006/209320 A1 | 10-13,18 |

☐ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 April, 2007 (04.04.07) | 17 April, 2007 (17.04.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5455620 A
- US 2004218044 A
- US 2005052534 A
- US 2004263627 A
- US 5307087 A
- US 2005140690 A
- US 2004165067 A
- US 5311295 A

**Non-patent literature cited in the description**

- DCI. Digital Cinema Standard, 20 July 2005